# FASCICULE DE BREVET EUROPEEN

(11) **EP 3 458 695 B1**
(45) Date de publication et mention de la délivrance du brevet: **18.11.2020**
(21) Numéro de dépôt: 17731211.3
(22) Date de dépôt: 19.05.2017
(51) Int. Cl.: F02C 1/10, F02C 7/14, F02C 7/18

(54) **SYSTÈME REVERSIBLE POUR LA DISSIPATION DE PUISSANCES THERMIQUES GÉNÉRÉES DANS UN MOTEUR À TURBINE À GAZ**
UMKEHRBARES SYSTEM ZUR ABLEITUNG DER IN EINEM GASTURBINENMOTOR ERZEUGTEN THERMISCHEN ENERGIE
REVERSIBLE SYSTEM FOR DISSIPATING THERMAL POWER GENERATED IN A GAS-TURBINE ENGINE

(30) Priorité: 20.05.2016 FR 1654508
(43) Date de publication de la demande: 27.03.2019
(73) Titulaire: Safran, 75015 Paris (FR)
(72) Inventeur: MAALOUF, Samer, 77550 Moissy-Crayamel Cedex (FR)
(74) Mandataire: Cabinet Beau de Loménie
(86) Numéro de dépôt international: PCT/FR2017/051223
(87) Numéro de publication internationale: WO 2017/198965

(56) Documents cités:
- EP-A1- 2 396 378
- WO-A1-2014/013170
- WO-A1-2015/165477
- WO-A2-2008/107623
- FR-A1- 2 951 250
- US-B1- 6 474 087

## Description

### Arrière-plan de l'invention

La présente invention se rapporte au domaine général de la dissipation de puissances thermiques générées dans un moteur à turbine à gaz. Elle concerne en particulier le refroidissement du circuit d'huile d'une turbomachine d'avion.

De façon connue, un moteur à turbine à gaz, tel qu'une turbomachine, comprend un circuit d'huile qui est utilisée pour lubrifier et/ou refroidir un certain nombre d'équipements du moteur, tels que des paliers à roulement, des boites d'engrenages, etc. La turbomachine comprend également un circuit de carburant qui alimente des injecteurs montés dans la chambre de combustion du moteur.

Le refroidissement de l'huile circulant dans le circuit d'huile du moteur est typiquement assuré par des échangeurs de chaleur de type carburant-huile (appelés en anglais FCOC pour « Fuel Cooled Oil Cooler ») et de type air-huile (appelés en anglais ACOC pour « Air Cooled Oil Cooler »).

Les échangeurs de chaleur FCOC ont la double fonction d'assurer un réchauffement du carburant avant son injection dans la chambre de combustion et de refroidir l'huile réchauffée par les dissipations thermiques du moteur. Or, ces échangeurs de chaleur FCOC ne suffisent plus à absorber toutes les dissipations thermiques du moteur, notamment du fait que la température que peut atteindre le carburant est limitée pour des contraintes de sécurité.

Aussi, il est connu de recourir également aux échangeurs de chaleur ACOC afin d'apporter un complément de refroidissement. Ces échangeurs de chaleur fonctionnent grâce à un flux d'air qui est typiquement prélevé dans la veine d'écoulement du flux secondaire de la turbomachine et qui est guidé le long d'une surface d'échange avec le circuit d'huile. Les échangeurs de chaleur ACOC peuvent être du type « surfacique », auquel cas ils se présentent sous la forme d'une pièce surfacique métallique permettant le passage d'huile dans des canaux usinés en son centre. L'extraction de calories est réalisée à l'aide d'ailettes en contact avec le flux d'air prélevé. Pour assurer des échanges thermiques importants, un tel échangeur doit présenter une surface importante, et donc également une masse et un encombrement importants. Les échangeurs de chaleur ACOC peuvent également être du type « brique ». Or, ces échangeurs de chaleur sont relativement lourds et ont pour désavantage de perturber le flux d'air et donc de pénaliser le rendement global de la turbomachine (avec une augmentation de la consommation de carburant spécifique SFC).

Quelle que soit la technologie utilisée pour les échangeurs de chaleur ACOC, ces derniers induisent des pertes de charge sur la veine d'écoulement du flux secondaire sur laquelle est prélevé l'air, et donc une baisse du rendement de la turbomachine avec une augmentation de la consommation de carburant spécifique SFC. De plus, les architectures futures de turbomachine à très haut taux de dilution (dénommées UHBR en anglais pour « Ultra High By Pass Ratio ») pourraient intégrer des réducteurs qui nécessiteraient un refroidissement par huile, et donc des besoins de refroidissement accrus pour l'huile du circuit d'huile de la turbomachine.

Pour pallier les inconvénients des échangeurs de chaleur ACOC, la demande de brevet WO 2014/013170 propose de remplacer l'échangeur de chaleur air-huile du système de refroidissement de l'huile par un dispositif thermodynamique du type pompe à chaleur. L'avantage d'un tel dispositif est qu'il permet de réduire la surface des échangeurs de chaleur (et donc de réduire les pertes de charges induites par ces échangeurs) par augmentation de la différence de température entre la source chaude (l'huile) et la source froide (l'air). En effet, avec ce dispositif, il est possible de porter le fluide frigorigène utilisé à des températures largement supérieures à celle de l'huile, de manière à obtenir un écart de température avec l'air pouvant être bien supérieur à 50°C, ce qui augmente l'efficacité du système de refroidissement et permet de limiter la taille de ce dernier de manière à ne pas impacter les performances globales de la turbomachine.

Les gains obtenus par ce dispositif thermodynamique en termes de diminution des pertes de charges induites par les échangeurs de chaleur sont toutefois à nuancer au regard du coût associé à la fourniture de puissance nécessaire au fonctionnement du compresseur équipant le dispositif.

### Objet et résumé de l'invention

La présente invention a donc pour but de proposer un système de refroidissement qui ne présente pas de tels inconvénients.

Conformément à l'invention, ce but est atteint grâce à un système réversible pour la dissipation de puissances thermiques générées dans un moteur à turbine à gaz, comprenant :
un premier échangeur de chaleur formant condenseur et destiné à assurer un échange de chaleur entre un fluide frigorigène et une source froide ;
un second échangeur de chaleur formant évaporateur et destiné à assurer un échange de chaleur entre le fluide frigorigène et une source chaude génératrice de puissance thermique ;
un compresseur à spirales disposé en amont du premier échangeur de chaleur et en aval du second échangeur de chaleur ; le compresseur à spirales étant apte à fonctionner comme compresseur lorsque la température de la source froide est supérieure à une température de seuil prédéfinie et comme turbine lorsque la température de la source froide est inférieure à la température de seuil ;
un détendeur et une pompe disposés en parallèle en aval du premier échangeur de chaleur et en amont du second échangeur de chaleur ; et
une vanne de contrôle disposée en amont du détendeur et de la pompe et apte à diriger le fluide frigorigène vers le détendeur lorsque la température de la source froide est supérieure à la température de seuil et vers la pompe lorsque la température de la source froide est inférieure à la température de seuil.

Le système de dissipation de puissances thermiques selon l'invention est remarquable en ce qu'il présente un fonctionnement réversible en fonction de la température de la source froide. Ce fonctionnement est le suivant.

Pendant les phases de vol durant lesquelles la température de la source froide (typiquement l'air lorsque le système est appliqué au refroidissement de l'huile du circuit d'huile) est relativement élevée (par exemple supérieure à une température de seuil de 20°C correspondant à des phases de ralenti au sol dans des conditions chaudes), le fluide frigorigène est chauffé et vaporisé l'évaporateur (second échangeur de chaleur) grâce à la chaleur prélevée sur la source chaude (typiquement l'huile du circuit d'huile), puis comprimé à haute température et haute pression par le compresseur à spirales fonctionnant comme compresseur. Le fluide frigorigène est ensuite condensé à la source froide par le condenseur (premier échangeur de chaleur) pour être finalement détendu en passant par le détendeur (grâce à une commande adéquate de la vanne de contrôle qui permet de contourner la pompe). Dans le cas d'une application au refroidissement de l'huile du circuit d'huile d'une turbomachine, il est ainsi possible de porter le fluide frigorigène à des températures largement supérieures à celle de l'huile, ce qui augmente l'efficacité du condenseur et permet d'en limiter la taille afin de ne pas impacter les performances globales de la turbomachine.

Pendant les phases de vol durant lesquelles la température de la source froide est relativement basse (et inférieure à la température de seuil prédéfinie), ce qui correspond par exemple aux phases de vol en croisière en conditions nominales ou froides, la différence de température entre la source chaude (l'huile) et la source froide (l'air) devient assez importante pour transformer la puissance dissipée par les calories de l'huile en travail mécanique. Dans ce cas, le fluide frigorigène est chauffé et vaporisé dans l'évaporateur grâce à la chaleur de l'huile, puis la vapeur est détendue dans le compresseur à spirales fonctionnant comme turbine pour produire un travail mécanique. La vapeur est ensuite condensée à l'air par le condenseur et transformée en liquide qui sera pompé par la pompe (la vanne de contrôle permettant de contourner le détendeur). De la sorte, le système de refroidissement fournit pendant ces phases de vol un travail mécanique (au lieu d'en consommer), ce qui permet d'améliorer les performances du moteur.

Par ailleurs, les phases de vol pendant lesquelles la température de la source froide (air) est relativement basse sont les plus importantes (par exemple la phase de vol en croisière est la partie la plus longue d'un vol). Pendant ces phases de vol, le système selon l'invention permet de fournir du travail mécanique au lieu d'en consommer, de sorte que le bilan global du système en termes de performance compense l'ajout des éléments constitutifs du système et les inconvénients qui sont habituellement liés à un tel ajout (consommation du compresseur à spirales, encombrement, poids, etc.).

Dans le cas d'une application au refroidissement de l'huile du circuit d'huile du moteur, la source chaude génératrice de puissance thermique est de l'huile du circuit d'huile et la source froide est de l'air provenant d'une veine d'écoulement de flux secondaire du moteur. Dans ce cas, le premier échangeur de chaleur peut être destiné à être positionné dans la veine d'écoulement de flux secondaire du moteur, et le second échangeur de chaleur, le compresseur à spirales, le détendeur et la pompe peuvent être destinés à être positionnés dans une nacelle du moteur.

L'invention a également pour objet un moteur à turbine à gaz, comprenant un circuit d'huile et un système réversible tel que défini précédemment pour la dissipation de la puissance thermique générée par l'huile du circuit d'huile.

L'invention a encore pour objet un procédé de fonctionnement d'un système réversible tel que défini précédemment, dans lequel la vanne de contrôle est activée pour diriger l'ensemble du fluide frigorigène ayant traversé le premier échangeur de chaleur vers le détendeur lorsque la température de la source froide est supérieure à la température de seuil prédéfinie, le compresseur à spirales fonctionnant alors comme compresseur, et dans lequel la vanne de contrôle est activée pour diriger l'ensemble du fluide frigorigène ayant traversé le premier échangeur de chaleur vers la pompe lorsque la température de la source froide est inférieure à la température de seuil prédéfinie, le compresseur à spirales fonctionnant alors comme turbine.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 et 2 sont des vues schématiques dans ses deux configurations de fonctionnement d'un système selon l'invention pour le refroidissement de l'huile d'un circuit d'huile de turbomachine ; et
- la figure 3 est une vue schématique en coupe transversale d'une turbomachine montrant l'emplacement des éléments du système des figures 1 et 2.

### Description détaillée de l'invention

L'invention s'applique à la dissipation de tout type de puissance thermique générée dans un moteur à turbine à gaz et qu'il est nécessaire d'évacuer.

L'exemple décrit ci-après concerne plus particulièrement la dissipation thermique de la puissance thermique générée par réchauffement de l'huile du circuit d'huile d'une turbomachine. Cependant, le système selon l'invention pourrait également s'appliquer à la dissipation des puissances thermiques provenant de l'échauffement de divers composants électriques d'un moteur à turbine à gaz, tels que par exemple des batteries ou des générateurs de puissance électrique.

De façon connue, le circuit d'huile d'une turbomachine comprend différents équipements utilisant de l'huile de refroidissement et/ou de lubrification, tels que des paliers à roulement (notamment pour les arbres de turbine et de compresseurs), des boites d'engrenages (tels que le boitier d'entrainement d'accessoires), des générateurs électriques, etc.

Le circuit d'huile comprend également des pompes de récupération permettant la recirculation de l'huile depuis les équipements vers un réservoir d'huile, des pompes d'alimentation, un ou plusieurs filtres, et un ou plusieurs échangeurs de chaleur huile-carburant (échangeurs de chaleur FCOC).

Le circuit d'huile comprend encore un système réversible de refroidissement de l'huile selon l'invention.

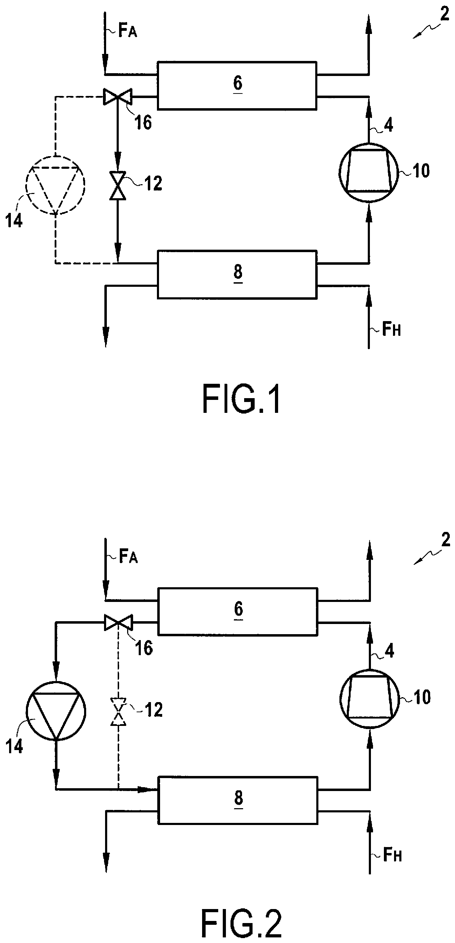

Comme représenté sur les figures 1 et 2, ce système de refroidissement 2 comprend un circuit de fluide frigorigène 4 équipé d'un premier échangeur de chaleur 6 formant condenseur, ce premier échangeur de chaleur étant destiné à assurer un échange de chaleur entre le fluide frigorigène et de l'air prélevé dans la veine d'écoulement de flux secondaire de la turbomachine.

Le circuit de fluide frigorigène 4 comprend un second échangeur de chaleur 8 formant évaporateur, ce second échangeur de chaleur étant destiné à assurer un échange de chaleur entre le fluide frigorigène et l'huile provenant du circuit d'huile.

En amont (dans le sens de circulation du fluide frigorigène) du premier échangeur de chaleur 6 et en aval du second échangeur de chaleur 8, le circuit de fluide frigorigène comprend encore un compresseur à spirales 10.

Le compresseur à spirales (également appelé compresseur spiro-orbital et connu sous le nom de « compresseur scroll ») est un compresseur connu qui emploie deux spirales intercalées comme des palettes pour pomper et comprimer des fluides. Généralement, l'une des spirales est fixe, tandis que l'autre se déplace excentriquement sans tourner, de sorte à pomper puis emprisonner et enfin comprimer des poches de fluide entre les spirales.

Le compresseur à spirales 10 est un appareil réversible qui présente la possibilité de fonctionner en alternance sous deux modes différents, à savoir en tant que compresseur ou en tant que turbine. Ces modes de fonctionnement différents seront décrits ultérieurement.

Le circuit de fluide frigorigène comprend encore un détendeur 12 (ou vanne d'expansion) et une pompe 14 qui sont installés en parallèle en aval du premier échangeur de chaleur 6 et en amont du second échangeur de chaleur 8. Une vanne de contrôle 16 (par exemple du type thermostatique) est disposée en amont du détendeur 12 et de la pompe 14 de façon à pouvoir diriger alternativement le fluide frigorigène vers le détendeur lorsque la température de l'air est supérieure à une température de seuil prédéfinie et vers la pompe lorsque la température de l'air est inférieure à la température de seuil. La température de seuil prédéfinie est variable en fonction de la puissance thermique d'huile à dissiper. A titre d'exemple, elle peut être fixée à 20°C.

Le fonctionnement du système de refroidissement selon l'invention est le suivant.

Pendant les phases de vol durant lesquelles la température de l'air circulant dans la veine d'écoulement du flux secondaire de la turbomachine est supérieure à la température de seuil prédéfinie (il s'agit par exemple des phases de ralenti au sol dans des conditions chaudes), le système de refroidissement selon l'invention fonctionne comme une pompe à chaleur (figure 1).

Dans ce mode de fonctionnement, le fluide frigorigène est chauffé et vaporisé au niveau du second échangeur de chaleur 8 grâce à la chaleur prélevée sur l'huile du circuit d'huile (le flux d'huile dans le second échangeur de chaleur est schématisé par la flèche F_{H}). La vapeur est ensuite comprimée (à haute température et haute pression) par le compresseur à spirales 10 fonctionnant comme compresseur.

Le fluide frigorigène est ensuite condensé à l'air par le premier échangeur de chaleur 6 (le flux d'air dans le premier échangeur de chaleur est schématisé par la flèche F_{A}) pour être finalement détendu en passant par le détendeur 12. Plus précisément, la vanne de contrôle 16 est activée (de préférence de façon automatique s'il s'agit d'une vanne de type thermostatique) pour contourner la pompe 14 et diriger l'ensemble du fluide frigorigène ayant traversé le premier échangeur de chaleur vers le détendeur 12.

Dans ce mode de fonctionnement, il est notamment possible de porter la température du fluide frigorigène à des températures largement supérieures à celle de l'huile, ce qui permet d'augmenter l'efficacité du premier échangeur de chaleur 6 et ainsi d'en limiter la taille afin de ne pas impacter les performances globales de la turbomachine.

Pendant les phases de vol durant lesquelles la température de l'air est inférieure à la température de seuil prédéfinie (ce qui correspond par exemple aux phases de vol en croisière en conditions nominales ou froides), la différence de température entre l'huile et l'air devient assez importante pour transformer la puissance dissipée par les calories de l'huile en travail mécanique. Le système de refroidissement selon l'invention fonctionne comme un cycle de Rankine Organique (figure 2).

Dans ce mode de fonctionnement, le fluide frigorigène est chauffé et vaporisé dans le second échangeur de chaleur 8 grâce à la chaleur de l'huile (le flux d'huile dans le second échangeur de chaleur est schématisé par la flèche F_{H}), puis la vapeur est détendue dans le compresseur à spirales 10 qui fonctionne alors comme turbine pour produire un travail mécanique.

La vapeur est ensuite condensée à l'air par le premier échangeur de chaleur 6 (le flux d'air dans le premier échangeur de chaleur est schématisé par la flèche F_{A}) et transformée en liquide qui sera pompé par la pompe 14. Plus précisément, la vanne de contrôle 16 est activée pour contourner le détendeur 12 et diriger l'ensemble du fluide frigorigène ayant traversé le premier échangeur de chaleur vers la pompe 14.

Dans ce mode de fonctionnement qui correspond aux phases de fonctionnement de la turbomachine les plus longues d'un vol, le système de refroidissement fournit un travail mécanique (au lieu d'en consommer), ce qui permet d'améliorer les performances du moteur. Par exemple, ce travail mécanique pourra être utilisé pour alimenter en puissance les pompes hydrauliques carburant ou huile.

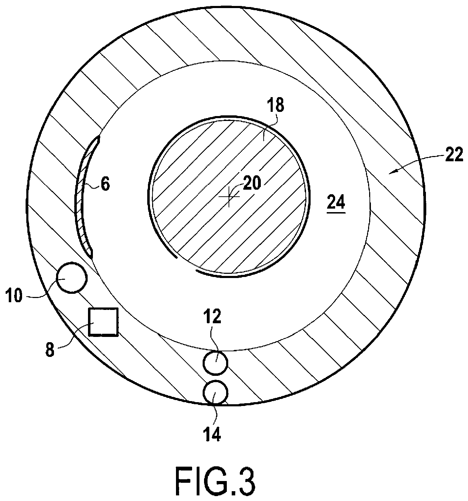

La figure 3 représente, de façon schématique, un exemple d'implantation des différents éléments du système de refroidissement selon l'invention au sein d'une turbomachine du type double corps et double flux.

Cette figure 3 montre, en coupe transversale, le générateur de gaz 18 de la turbomachine centré sur un axe longitudinal 20 de celle-ci. Ce générateur de gaz est entouré par une nacelle 22, également centrée sur l'axe 20, de façon à délimiter avec celle-ci une veine annulaire d'écoulement du flux secondaire 24.

De préférence, l'air utilisé comme source froide par le système de refroidissement selon l'invention est ici de l'air provenant de la veine d'écoulement du flux secondaire 24 de la turbomachine. A cet effet, le premier échangeur de chaleur 6 est positionné dans la veine d'écoulement de flux secondaire, par exemple contre une surface interne de la nacelle 22 délimitant à l'extérieur cette veine.

Quant au second échangeur de chaleur 8, au compresseur à spirales 10, au détendeur 12 et à la pompe 14, ils peuvent être positionnés directement dans la nacelle 22 de la turbomachine.

## Revendications

1. Système réversible (2) pour la dissipation de puissances thermiques générées dans un moteur à turbine à gaz, comprenant :
un premier échangeur de chaleur (6) formant condenseur et destiné à assurer un échange de chaleur entre un fluide frigorigène et une source froide ;
un second échangeur de chaleur (8) formant évaporateur et destiné à assurer un échange de chaleur entre le fluide frigorigène et une source chaude génératrice de puissance thermique ;
un compresseur à spirales (10) disposé en amont du premier échangeur de chaleur et en aval du second échangeur de chaleur ; le compresseur à spirales étant apte à fonctionner comme compresseur lorsque la température de la source froide est supérieure à une température de seuil prédéfinie et comme turbine lorsque la température de la source froide est inférieure à la température de seuil ;
un détendeur (12) et une pompe (14) disposés en parallèle en aval du premier échangeur de chaleur et en amont du second échangeur de chaleur ; et
une vanne de contrôle (16) disposée en amont du détendeur et de la pompe et apte à diriger le fluide frigorigène vers le détendeur lorsque la température de la source froide est supérieure à la température de seuil et vers la pompe lorsque la température de la source froide est inférieure à la température de seuil.

2. Moteur à turbine à gaz du type double corps et double flux comprenant un système selon la revendication 1, dans lequel la source chaude génératrice de puissance thermique est de l'huile d'un circuit d'huile du moteur et la source froide est de l'air provenant d'une veine d'écoulement de flux secondaire (24) du moteur.

3. Moteur selon la revendication 2, dans lequel le premier échangeur de chaleur (6) est positionné dans la veine d'écoulement de flux secondaire du moteur.

4. Moteur selon l'une des revendications 2 et 3, dans lequel le second échangeur de chaleur (8), le compresseur à spirales (10), le détendeur (12) et la pompe (14) sont positionnés dans une nacelle (22) du moteur.

5. Moteur à turbine à gaz, comprenant un circuit d'huile et un système réversible selon la revendication 1 pour la dissipation de la puissance thermique générée par l'huile du circuit d'huile.

6. Procédé de fonctionnement d'un système réversible selon la revendication 1, dans lequel :
la vanne de contrôle (16) est activée pour diriger l'ensemble du fluide frigorigène ayant traversé le premier échangeur de chaleur (6) vers le détendeur (12) lorsque la température de la source froide est supérieure à la température de seuil prédéfinie, le compresseur à spirales (10) fonctionnant alors comme compresseur ; et
la vanne de contrôle est activée pour diriger l'ensemble du fluide frigorigène ayant traversé le premier échangeur de chaleur (6) vers la pompe (14) lorsque la température de la source froide est inférieure à la température de seuil prédéfinie, le compresseur à spirales fonctionnant alors comme turbine.

## Patentansprüche

1. Umkehrbares System (2) zum Abführen von in einem Gasturbinentriebwerk erzeugter Wärmeleistung, umfassend:
einen ersten Wärmetauscher (6), der einen Kondensator bildet und dazu bestimmt ist, einen Wärmeaustausch zwischen einem Kältemittel und einer Kältequelle sicherzustellen,
einen zweiten Wärmetauscher (8), der einen Verdampfer bildet und dazu bestimmt ist, einen Wärmeaustausch zwischen dem Kältemittel und einer Wärmeleistung erzeugenden heißen Quelle sicherzustellen,
einen Spiralverdichter (10), der dem ersten Wärmetauscher vorgeschaltet und dem zweiten Wärmetauscher nachgeschaltet ist, wobei der Spiralverdichter geeignet ist, als Verdichter zu arbeiten, wenn die Temperatur der Kältequelle höher als eine vordefinierte Schwellentemperatur ist, und als Turbine, wenn die Temperatur der Kältequelle niedriger als die Schwellentemperatur ist,
einen Druckminderer (12) und eine Pumpe (14), die parallel angeordnet dem ersten Wärmetauscher nachgeschaltet und dem zweiten Wärmetauscher vorgeschaltet sind, und
ein Steuerventil (16), das dem Druckminderer und der Pumpe vorgeschaltet ist und das geeignet ist, das Kältemittel in Richtung des Druckminderers zu leiten, wenn die Temperatur der Kältequelle höher als die Schwellentemperatur ist, und in Richtung der Pumpe, wenn die Temperatur der Kältequelle niedriger als die Schwellentemperatur ist.

2. Gasturbinentriebwerk vom Zweiwellen- und Zweistrom-Typ, umfassend ein System nach Anspruch 1, bei dem die heiße Quelle, welche Wärmeleistung erzeugt, Öl eines Ölkreislaufs des Triebwerks ist und die Kältequelle Luft ist, die aus einem Sekundärstrom-Strömungskanal (24) des Triebwerks stammt.

3. Triebwerk nach Anspruch 2, bei dem der erste Wärmetauscher (6) in dem Sekundärstrom-Strömungskanal des Triebwerks positioniert ist.

4. Triebwerk nach einem der Ansprüche 2 und 3, bei dem der zweite Wärmetauscher (8), der Spiralverdichter (10), der Druckminderer (12) und die Pumpe (14) in einer Gondel (22) des Triebwerks angeordnet sind.

5. Gasturbinentriebwerk, umfassend einen Ölkreislauf und ein umkehrbares System nach Anspruch 1 zum Abführen der durch das Öl des Ölkreislaufs erzeugten Wärmeleistung.

6. Verfahren zum Betreiben eines umkehrbaren Systems nach Anspruch 1, bei dem:
das Steuerventil (16) aktiviert wird, um das gesamte Kältemittel, welches den ersten Wärmetauscher (6) durchlaufen hat, in Richtung des Druckminderers (12) zu leiten, wenn die Temperatur der Kältequelle höher als die vordefinierte Schwellentemperatur ist, wobei der Spiralverdichter (10) dann als Verdichter arbeitet, und
das Steuerventil aktiviert wird, um das gesamte Kältemittel, welches den ersten Wärmetauscher (6) durchlaufen hat, in Richtung der Pumpe (14) zu leiten, wenn die Temperatur der Kältequelle niedriger als die vordefinierte Schwellentemperatur ist, wobei der Spiralverdichter dann als Turbine arbeitet.

## Claims

1. Reversible system (2) for dissipating heat power generated in a gas turbine engine, the system comprising:
a condenser-forming first heat exchanger (6) for exchanging heat between a refrigerant fluid and a cold source;
an evaporator-forming second heat exchanger (8) for exchanging heat between the refrigerant fluid and a hot source generating heat power;
a scroll compressor (10) arranged upstream from the first heat exchanger and downstream from the second heat exchanger; the scroll compressor being suitable for operating as a compressor when the temperature of the cold source is higher than a predefined threshold temperature and as a turbine when the temperature of the cold source is lower than the threshold temperature;
an expander (12) and a pump (14) arranged in parallel downstream from the first heat exchanger and upstream from the second heat exchanger; and
a control valve (16) arranged upstream from the expander and the pump and suitable for directing the refrigerant fluid to the expander when the temperature of the cold source is higher than the threshold temperature and to the pump when the temperature of the cold source is lower than the threshold temperature.

2. Two spool unmixed flow gas turbine engine comprising a system according to claim 1, wherein the hot source generating heat power is oil of an oil circuit of the engine and the cold source is air coming from a flow passage (24) for the engine secondary stream.

3. Engine according to claim 2, wherein the first heat exchanger (6) is located in the flow passage for the engine secondary stream.

4. Engine according to claim 2 or claim 3, wherein the second heat exchanger (8), the scroll compressor (10), the expander (12), and the pump (14) are located in a nacelle (22) of the engine.

5. Gas turbine engine including an oil circuit and a reversible system according to claim 1 for dissipating the heat power generated by the oil of the oil circuit.

6. Method of operating a reversible system according to claim 1, in which:
the control valve (16) is activated to direct all of the refrigerant fluid that has passed through the first heat exchanger (6) to the expander (12) when the temperature of the cold source is higher than the predefined threshold temperature, the scroll compressor (10) acting here as a compressor; and
the control valve is activated to direct all of the refrigerant fluid that has passed through the first heat exchanger (6) to the pump (14) when the temperature of the cold source is lower than the predefined threshold temperature, the scroll compressor operating here as a turbine.
